Europäisches Patentamt

(19) European Patent Office

Office européen des brevets

(11) Publication number: **0 183 719**
**B1**

(12) # EUROPEAN PATENT SPECIFICATION

(45) Date of publication of patent specification: **23.11.88**

(51) Int. Cl.⁴: **A 01 M 23/24**

(21) Application number: **85902175.0**

(22) Date of filing: **06.05.85**

(86) International application number:
**PCT/NO85/00024**

(87) International publication number:
**WO 85/05007 21.11.85 Gazette 85/25**

(54) THE STRIKE TRAP FOR CATCHING MICE AND RATS.

(30) Priority: **07.05.84 NO 841815**

(43) Date of publication of application:
**11.06.86 Bulletin 86/24**

(45) Publication of the grant of the patent:
**23.11.88 Bulletin 88/47**

(84) Designated Contracting States:
**AT BE CH DE FR GB IT LI LU NL SE**

(56) References cited:
**US-A- 998 047**
**US-A-1 039 878**
**US-A-1 657 976**
**US-A-2 257 246**

(73) Proprietor: **LANGLI, Karl**
**N-6650 Surnadal (NO)**
(73) Proprietor: **LANGLI, Lars**
**N-6650 Surnadal (NO)**

(72) Inventor: **LANGLI, Ola, K.**
**N-6650**
**Surnadal (NO)**

(74) Representative: **Barker, Rosemary Anne et al**
**Barlow, Gillett & Percival 94 Market Street**
**Manchester M1 1PJ (GB)**

Courier Press, Leamington Spa, England.

## Description

The invention consists of a strike trap for rodents, particularly mice and rats. The strike trap is of the type described in the introduction to claim 1. Many proposed mouse and rat traps of this type attempt to kill the animals with a spring-loaded element which swings downwards.

A common construction, for example as disclosed in US 1657976 and US 998047, has a spring-loaded swivelling striker which is held in a loaded position by means of a swivelling member connected to bait or to a bait holder. Such traps are difficult to load and can be sprung without the animal being in a central position in the impact zone. Further, there is only space for a small bait. Another important disadvantage is that after such traps have been in use for a while, they exude repellent odours which make them badly suited for their purpose. The main object of this invention has therefor been to design a strike trap with improved use characteristics, particularly a trap which provides greater enticement and the certain extermination of the animal. A specific aim has been to construct a trap which can be used with animals of differing size and which can employ larger baits than is usual. Another object was to design a trap which is easy to load and prepare prior to setting it out.

These objects have been met by this new invention—the strike trap, outlined in the characterizing part of patent claim 1. As will be shown, this trap offers a number of decisive advantages. It is a trap with satisfactory use characteristics which can be maintained on a long-term basis. It can be manufactured from indestructible, odourless materials which cannot be attached by external forces or exude unwanted, repellent odours which hamper its enticement effect.

The invention will be described in further detail with reference to the drawings, where:

Figure 1 shows a vertical cross-section along a longitudinal plan of one embodiment of the invention, while

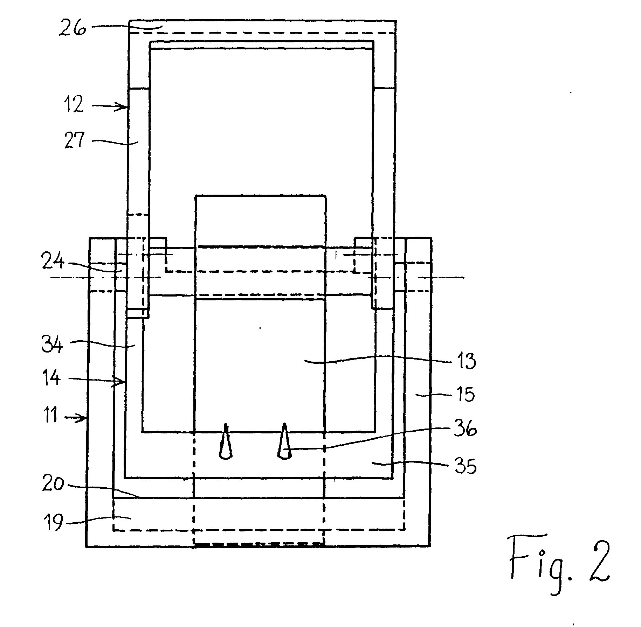

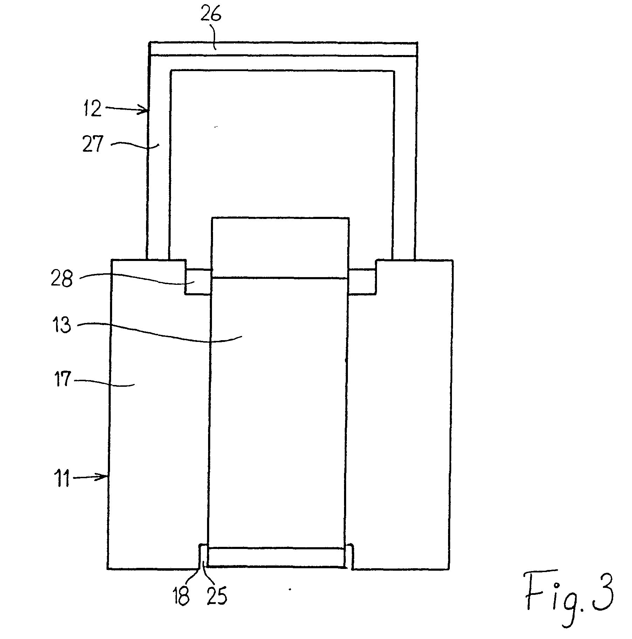

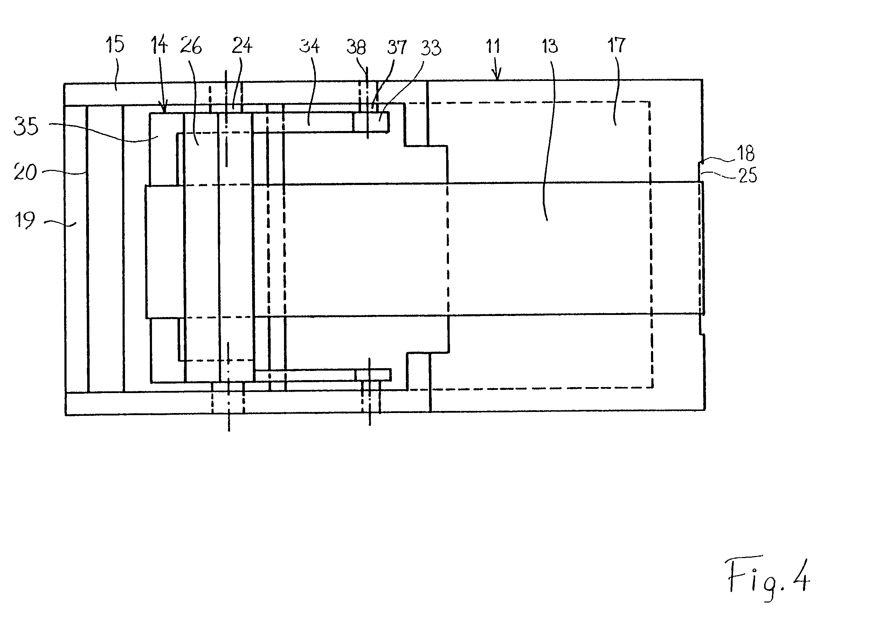

Figures 2, 3 and 4 show the front plan, the back plan and the top plan of the trap respectively.

The trap in the example has four main parts: A stand or support 11, a striker 12, a spring 13 and a release lever 14. Each of these parts and the linkage between them will be described below.

The support 11 has two parallel plate-shaped side walls 15 which have smoothly decreasing length towards the top edge 16. These side walls are connected to a transverse wall 17 towards the back and a transverse support 19 with an upwards-facing strike face 20 at the bottom at the front edge 21. The transverse support 19 is extended into the base plate of the support 11 through a transverse plate 22. The purpose of this is to reduce the possibility of mispositioning the bait. At the top edge 16 along the front 21 there is a continuous groove 23 on each side wall 15 which runs obliquely downwards towards the back from the top edge. The bottom of this groove is rounded. It serves as a support for pivot pins 24 for the striker 12. This part of the design will now be described in more detail.

The transverse wall 17 at the back edge 18 has a notch 25 just in from the edge to hold the back end of the spring 13.

The striker 12 is approximately U-shaped, consisting of a strike pin 26 supported between two arms 27, each arm 27 having a pivot pin 24 on its other end. These pins 24 are located in the grooves 23 so that the strike pin 26 can swivel from an upper, loaded position to a lower position making firm contact with the animal's neck.

The arm 27 is shaped so that the strike pin 26 reaches to just above the strike face 20 on the transverse support 19 and can pass through to the inside of the support 11. The strike pin 26 and the strike face 20 will combine to kill an animal that enters the trap and releases the striker. The means of operation is as follows:

The striker 12 also has a transverse lug 28 which is supported by a short arm 29 on each side, up to the side walls 15 in such a way that the inner ends of the arms 29 are connected to their respective arms 27 by the respective pivot pins 24. The longitudinal axis for each arm 29 generally forms a right angle with the longitudinal axis of the adjoining arm 27. The transverse lug 28 forms a point of attachment or abutment for the spring 13 as outlined below.

On one side of the striker 12 there is a protruding arm 30 which is designed to restrain the striker 12 when it is in a raised position by engagement with a locking lug 31 on the release lever 14.

This arm 30 is plate-shaped and has a notch 32 on its free end. As the outer edge of the arm 30 protrudes slightly outwards to a rounded lug 33 a good grip is obtained during loading.

The release lever 14 has been generally designed along the same lines as the striker 12, with two arms 34 which hold a release support 35. The latter has two teeth 36. The other ends of the arms 34 are swivellably mounted by respective protruding axle pivots 37 which are located in holes 38 through each of the side walls 15 at the top. The holes 38 are about on a level with the grooves 23 and are located inside these in relation to the front edge 21 of the support 11. The arms 34 are bent so as to have respective short inner parts 34A and longer forward-facing outer parts 34B holding the release support 35 between their distal ends.

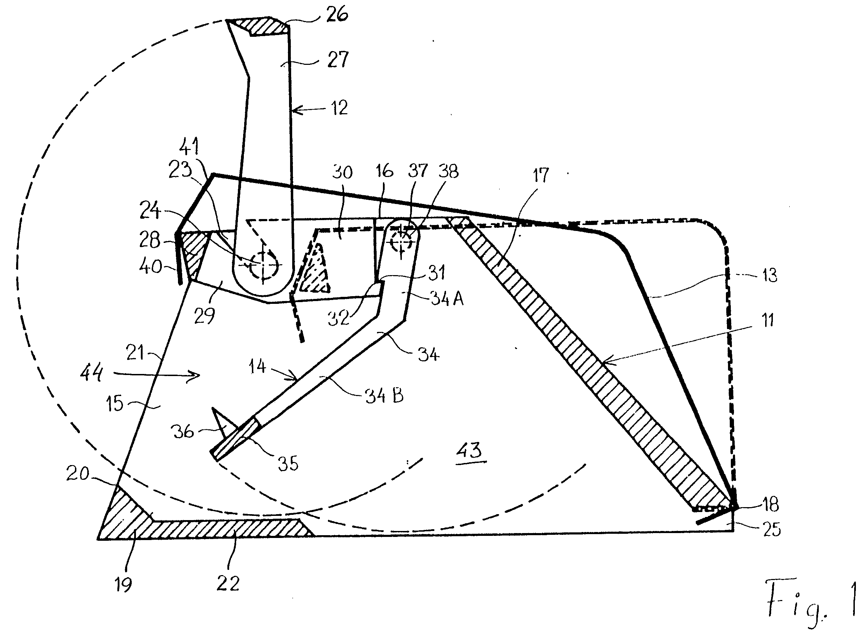

The inner part of the arms 34 is furnished with a projection or a locking lug 31 inclined towards the striker 12 and the notch 32. The notch 32 and the projection 31 are designed so that they can be engaged when the striker 12 is swung upwards and the release lever 13 moved forwards as far as possible. The striker 12 is now held locked in a raised, loaded position with the spring 13, as in Figure 1, fully tensioned. The alternative position of the spring is shown by a broken line.

If the release support 35 is moved slightly, the projection or locking lug 31 will no longer be restrained by the notch 32 and will release the striker 12. The teeth 36 prevent smaller animals getting too far into the trap without touching the release support 35. Should the release support 35 be over-extended this will lead to an increased load and an insecure locking position for the release lever 14.

The spring 13 is a band-shaped steel spring and is stretched in a bend between the lower edge of the transverse wall 17, over the side walls 15, and forward to the transverse lug 28. Each end of the spring 13 has an inward bend so that a firm grip is made upon the respective end attachments. At the transverse lug 28 there is an outer 40 and an inner bend 41. These are adjusted so as to lie against each of the transverse lug's two sides according to whether it is in the loaded or released position. Apart from the spring 13, the other parts of the trap illustrated are made of plastic in the usual way. This alleviates corrosion and similar undesirable effects.

In use, the trap is placed over a bait (not shown) which is easily fitted into the open space between the side walls 15 (Figure 1). The bait or baits should not be attached to any part of the trap, rather should be located on a level surface before the trap is placed in position. When the striker 12 is fixed in the loaded position shown, the trap is ready for use.

In some cases, such as outdoor use, the trap can be anchored to a surface by a nail through a hole or by a cable (not shown).

The trap is only accessible to animals from one side in order to avoid unintentional release. This will increase the catch reliability and avoid injuring animals by a stray blow. As the striker will not be released unless an animal enters the trap, unnecessary strain upon the construction following unintentional releases is avoided.

When released the striker will hit the animal's neck, almost regardless of the size of the animal. The blow will have a horizontal component which will stretch the head away from the rest of the body and increase the probability of death.

As the invention alleviates the difficulty of fixing the bait onto any part of the trap, this eases its setting up and makes it possible to use bigger and more odourous baits than in existing traps. This also alleviates the deposit of bait remains on the trap which cannot only be unhygenic and reduce the enticement effect but may possibly impair the working mechanisms.

The invention enables the trap to be loaded with one hand by pointing the trap downwards and pushing lug 33 backwards. Emptying after a strike can be carried out in the same way as loading without having to touch the animal.

By using an alternative design, the striker 12 can be locked in a loaded position without requiring a locking element if one of the side walls 15 has a stopper which allows the striker to swing past its neutral position relatively to the action of the spring 13.

The spring 13 can thereby hold the striker in an open position. In this case, the release lever 14 must have a projection above the swing axis of the striker 12 so that it can move the striker past the neutral position.

By this design, the loading and setting of the trap becomes even more straight forward.

The spring 13, which alternatively can be a coil spring, can be fixed in a tensed position between the striker 12 and the support 11.

In a further alternative embodiment, the striker 12 can have pivot pins with a knife edge, the striker being journalled to be pivoted past its neutral position as described above. The release lever 14 will be provided with a protrusion (not shown), which on pivoting of the lever upwards, away from the bait, engages the arm 30 and thus moves the striker 12 out of its engagement and past its neutral position. The release lever 14 and the arm 30 of the striker may have a locking engagement in the loaded position of the trap which is different from the more simple embodiment mentioned above.

## Claims

1. Strike trap for the capture and extermination of rodents, such as mice and rats etc., comprising striker means (12) pivotally mounted on support means (11) which encloses a bait location (43) and has an access opening (44) thereto, wherein the striker means (12) is spring-loaded and is releasable from a raised loaded position by an actuation member (31) connected to a swivellable release lever (14), which protrudes between the access opening (44) and the location of the bait, and wherein the striker means (12) is provided with an active strike member (26) which co-operates, upon downward pivoting of the strike means, with an upwardly facing stationary strike member (20) positioned at the lower edge (19) of the access opening, characterised in that the active strike member (26), upon downward pivotting, swings inwards beyond the stationary strike member (20) to impart a horizontally directed fatal blow to any animal entering the opening.

2. Strike trap according to claim 1, characterized in that the support means (11) is shaped so that the bait can be placed directly upon a surface below the trap.

3. Strike trap according to claims 1 or 2 characterized in that the support means (11) comprises two side walls (15) one at each side of the bait location (43) and a transverse member (19) extending between the side walls at the lower edge of one end, the striker means (12) being mounted between the top edges of the respective side walls.

4. Strike trap according to claim 3, characterized in that the striker means (12) comprises two swivelling arms (27) which hold the striker means' active member (26) between their free ends, the arms being mounted on the respective side walls (15).

5. Strike trap according to any preceding claim, characterized in that the spring loaded striker means (12) is held in a loaded position by being moved past its neutral position, relative to its strike movement under spring load, and being maintained there by the release lever (14).

6. Strike trap according to any preceding claim, characterized by including a band-shaped spring (13) which extends from an abutment (25) at the back of the support (11) to a transverse lug (28) on the striker means (12).

## Patentansprüche

1. Schlagfalle zum Fangen und Vernichten von Nagetieren, wie Mäuse und Ratten etc., die ein Schlagmittel (12) umfaßt, das gelenkig auf einem Lagermittel (11) angeordnet ist, und die einen Köderplatz (43) einschließt und eine Zugangsöffnung (44) dazu aufweist, wobei das Schlagmittel (12) federbelastet und aus einer erhöhten belasteten Position durch ein Betätigungselement (31) freigebbar ist, das mit einem schwenkbaren Auslösehebel (14) verbunden ist, der zwischen der Zugangsöffnung (44) und dem Platz des Köders vorsteht, und wobei das Schlagmittel (12) mit einem aktiven Schlagelement (26) versehen ist, das bei der Drehbewegung des Schlagmittels nach unten mit einem nach oben gerichteten stationären Schlagelement (20) zusammenwirkt, das am unteren Rand (19) der Zugangsöffnung angeordnet ist, dadurch gekennzeichnet, daß das aktive Schlagelement (26) bei der Drehbewegung nach unten über das stationäre Schlagelement (20) hinaus nach innen schwingt, um einem die Öffnung betretenden Tier einen horizontal gerichteten tödlichen Schlag zu versetzen.

2. Schlagfalle nach Anspruch 1, dadurch gekennzeichnet, daß das Lagermittel (11) so ausgebildet ist, daß der Köder direkt auf eine Fläche unterhalb der Falle gelegt werden kann.

3. Schlagfalle nach Anspruch 1 oder 2, dadurch gekennzeichnet, daß das Lagermittel (11) zwei Seitenwände (15), eine an jeder Seite des Köderplatzes (43), und ein Querelement (19) umfaßt, das sich zwischen den Seitenwänden am unteren Rand eines Endes erstreckt, wobei das Schlagmittel (12) zwischen den oberen Rändern der jeweiligen Seitenwände angeordnet ist.

4. Schlagfalle nach Anspruch 3, dadurch gekennzeichnet, daß das Schlagmittel (12) zwei Schwenkarme (27) umfaßt, die das aktive Element (26) des Schlagmittels zwischen ihren freien Enden halten, wobei die Arme auf den jeweiligen Seitenwänden (15) angebracht sind.

5. Schlagfalle nach irgendeinem der vorstehenden Ansprüche, dadurch gekennzeichnet, daß das federbelastete Schlagmittel (12) dadurch in belasteter Position gehalten wird, daß es an seiner neutralen Position relativ zu seiner Schlagbewegung unter Federbelastung, vorbei zurückbewegt und dort durch den Auslösehebel (14) festgehalten wird.

6. Schlagfalle nach irgendeinem der vorstehenden Ansprüche, dadurch gekennzeichnet, daß sie eine bandförmige Feder (13) einschließt, die von einem Widerlager (25) auf der Unterseite des Lagers (11) ausgeht und über einen Querzapfen (28) auf dem Schlagmittel (12) vorsteht.

## Revendications

1. Piège à frappe pour la capture et l'extermination de rongeurs, tels que souris et rats etc., comprenant un moyen de frappe (12) monté pivotant sur un moyen de support (11), qui inclut un emplacement d'appât (43) et possède une ouverture d'accès (44) à celui-ci, dans lequel le moyen de frappe (12) est rappelé par ressort et est libérable d'une position de rappel élevée par une pièce d'actionnement (31) reliée à un levier de libération (14) pouvant pivoter, qui s'avance entre l'ouverture d'accès (44) et l'emplacement de l'appât, et dans lequel le moyen de frappe (12) est muni d'une pièce de frappe active (26) qui coopère, quand le moyen de frappe pivote vers le bas, avec une pièce de frappe fixe (20) faisant face vers le haut et placée au bord inférieur (19) de l'ouverture d'accès, caractérisé par le fait que la pièce de frappe active (26), quand elle pivote vers le bas, bascule vers l'intérieur au-delà de la pièce de frappe fixe (20) pour appliquer un coup fatal, dirigé horizontalement, à tout animal entrant par l'ouverture.

2. Piège à frappe selon la revendication 1, caractérisé par le fait que la moyen de support (11) est de forme telle que l'appât peut être placé directement sur une surface sous le piège.

3. Piège à frappe selon la revendication 1 ou 2, caractérisé par le fait que le moyen de support (11) comprend deux parois latérales (15), une de chaque côté de l'emplacement d'appât (43), et une pièce transversale (19) s'étendant entre les parois latérales au bord inférieur d'une des extrémités, le moyen de frappe (12) étant monté entre les bords supérieurs des parois latérales respectives.

4. Piège à frappe selon la revendication 3, caractérisé par le fait que le moyen de frappe (12) comprend deux bras pivotants (27) qui portent la pièce active (26) du moyen de frappe entre leurs extrémités libres, les bras étant montés sur les parois latérales respectives (15).

5. Piège à frappe selon l'une des revendications précédentes, caractérisé par le fait que le moyen de frappe (12) rappelé par ressort est maintenu en position de rappel en étant amené au-delà de sa position neutre, relativement à son mouvement de frappe sous rappel du ressort et y étant maintenu par le levier de libération (14).

6. Piège à frappe selon l'une des revendications précédentes, caractérisé par le fait qu'il inclut un ressort en forme de bande (13) qui s'étend d'une butée (25) à l'arrière du support (11) à une patte transversale (28) sur le moyen de frappe (12).

Fig. 1

EP 0 183 719 B1

Fig. 2

Fig.3

Fig.4